# EUROPÄISCHE PATENTSCHRIFT

(11) **EP 1 013 374 B1**
(45) Veröffentlichungstag und Bekanntmachung des Hinweises auf die Patenterteilung: **01.04.2009**
(21) Anmeldenummer: 99123819.7
(22) Anmeldetag: 01.12.1999
(51) Int. Cl.: B23Q 11/00, B23Q 3/157, B23Q 1/52, B23Q 1/48, B23Q 11/08

(54) **Werkzeugmaschine mit von unten arbeitender Werkzeugspindel**
Machine tool with spindle working from below
Machine-outil avec broche travaillant par le bas

(30) Priorität: 23.12.1998 DE 19859662
(43) Veröffentlichungstag der Anmeldung: 28.06.2000
(73) Patentinhaber: Chiron-Werke GmbH & Co. KG, 78532 Tuttlingen (DE)
(72) Erfinder: Schweizer, Anton, 78573 Wurmlingen (DE); Winkler, Hans-Henning, Dr., 78532 Tuttlingen (DE)
(74) Vertreter: Otten, Hajo

(56) Entgegenhaltungen:
- EP-A- 0 812 652
- EP-A- 0 820 835
- WO-A-98/04383
- DE-A- 4 117 723
- DE-A- 4 435 024
- DE-A- 19 521 846
- DE-C- 307 739
- GB-A- 2 167 325
- US-A- 4 524 812
- US-A- 4 679 295
- US-A- 5 439 431
- US-A- 5 678 291
- US-A- 5 807 044
- PATENT ABSTRACTS OF JAPAN vol. 014, no. 155 (M-0954), 26. März 1990 (1990-03-26) & JP 02 015945 A (AHRESTY CORP), 19. Januar 1990 (1990-01-19)

## Beschreibung

Die vorliegende Erfindung betrifft eine Werkzeugmaschine mit einem Werkstücktisch zum Fixieren von zu bearbeitenden Werkstücken und einer Werkzeugspindel mit einer Werkzeugaufnahme für Werkzeuge zur Bearbeitung der Werkstücke, bei der die Werkzeugspindel mit nach oben weisender Werkzeugaufnahme an einer zumindest zum Teil unterhalb des Werkstücktisches angeordneten Verschiebemechanik gelagert ist, so daß die Werkzeugmaschine mit in Betriebsstelle nach oben weisendem Werkzeug über Kopf arbeitet, wobei der Werkstücktisch eine Vorrichtung zum Fixieren der zu bearbeitenden Werkstücke umfasst, wobei die Vorrichtung um eine horizontale Achse schwenkbar ist.

Derartige Werkzeugmaschinen sind aus der DE 307 739 A bekannt. Durch die gewählte Konstruktion soll dort verhindert werden, daß sich Späne auf dem Werkstück und der Spanvorrichtung ansammeln.

Weiter bekannte Werkzeugmaschinen weisen in der Regel eine vertikalachsige Werkzeugspindel auf, die oberhalb eines Werkstücktisches angeordnet ist, auf dem die zu bearbeitenden Werkstücke mittels Vorrichtung genannter Spannzeuge fixiert werden.

Aus der DE 41 17 723 A1, der DE 44 35 024 A1 und der US 4,679,295 sind Werkzeugmaschinen bekannt, bei denen das Werkzeug ebenfalls über Kopf arbeitet, wobei Werkstück und Werkzeug in orthogonalen Richtungen zueinander verfahrbar sowie ggf. um eine der orthogonalen Achsen verschwenkbar sind.

Aus der US 4,524, 812 ist eine Werkzeugmaschine bekannt, bei der ein nach oben gerichtetes Werkzeug auf einer geraden Bahn oder einer Kreisbahn zwangsgeführt wird, zur Erhöhung der Stabilität kann die Werkzeugspindel zusätzlich mit einem Hebelarm verbunden sein.

Die Werkzeugspindel und der Werkstücktisch sind zueinander in drei orthogonalen Achsen verfahrbar, so daß die Oberseite des Werkstückes in bekannter Weise spanabhebend bearbeitet werden kann.

Dabei wird in der Regel Kühlschmiermittel eingesetzt, um das im Einsatz befindliche Werkzeug sowie das Werkstück zu kühlen und die entstehenden Späne wegzubefördern.

Mit dem Einsatz dieser Kühlschmiermittel sind eine ganze Reihe von Problemen verbunden. Das in einer Spänewanne zusammen mit den entstandenen Spänen gesammelte Kühlschmiermittel muß gereinigt und gefiltert werden, was ein sehr aufwendiges Handling erfordert. Die Kühlschmiermittel dampfen dabei aus und führen wegen ihrer Aggressivität zu Hautproblemen bei dem Servicepersonal, so daß neben dem aufwendigen Handling auch ein hoher Entsorgungsaufwand mit dem Einsatz von Kühlschmiermittel verbunden ist.

Es ist inzwischen bekannt, daß je nach Werkstück 10 - 25 Prozent der Fertigungskosten auf das Kühlschmiermittel zurückzuführen sind. So wird Aluminium zum Beispiel während der Bearbeitung infolge des Einsatzes des Kühlschmiermittels fleckig und muß anschließend gereinigt und danach noch getrocknet werden.

Insgesamt ist der Einsatz des Kühlschmiermittels also mit großen Problemen verbunden, so daß seit einiger Zeit Bestrebungen im Gange sind, die bekannten Werkzeugmaschinen mit einer sogenannten Minimalmengenschmierung zu betreiben, wie sie an sich aus dem Stand der Technik bekannt ist. Bei derartigen Systemen mit Minimalmengenschmierung werden nur noch ein cm³ pro Stunde Kühlschmiermittel eingesetzt, was durch neue Werkzeuggeometrien und -beschichtungen technisch beherrschbar ist. Es ergeben sich jedoch Probleme mit den heißen Spänen.

Es ist nämlich so, daß nur 10 Prozent der infolge der Bearbeitung entstehenden Wärme im Werkstück gespeichert wird, die restlichen 90 Prozent gehen in die erzeugten Späne. Diese Späne fallen auf flächige Bereiche z.B. der Schlitten und führen dort zu thermischen Deflektionen. Durch eine Überschwallung mit Kühlschmiermittel werden diese heißen Späne zum einen gekühlt und zum anderen unmittelbar in die Spänewanne abgeführt.

Bei der Bearbeitung mit Minimalmengenschmierung oder gar bei der Trockenbearbeitung entstehen deutlich heißere Späne als beim Einsatz mit Kühlschmiermittel, die zu deutlich größeren thermischen Deflektionen der Werkzeugmaschine führen, die nur schwer regelungstechnisch beherrschbar sind.

Diese heißen Späne heizen die Struktur der Maschine auf, was die erwähnten Genauigkeitsprobleme bringt, führen jedoch auch zu Funktionsproblemen, wenn sie auf dem Werkstück oder Teilen der Maschine liegenbleiben. Bleiben derartige Späne z.B. auf den Führungsschienen der Schlitten liegen, so können sie beim Verfahren des Schlittens in die Führungsschienen eingedrückt werden und diese so beschädigen, daß die Maßhaltigkeit beim Verfahren der Schlitten beeinträchtigt wird.

Vor diesem Hintergrund ist es Aufgabe der vorliegenden Erfindung, bei der eingangs erwähnten Werkzeugmaschine die oben erwähnten, mit den Spänen zusammenhängenden Probleme durch einfache konstruktive Maßnahmen zu reduzieren.

Erfindungsgemäß wird diese Aufgabe bei der eingangs genannten Werkzeugmaschine dadurch gelöst, dass die Verschiebemechanik zumindest ein Hebelgetriebe umfasst, das um eine durch ein Gelenk gebildete vertikale Achse schwenkbar an einem Maschinengestell der Werkzeugmaschinen gelagert ist, und dass das Hebelgetriebe zwei um ein Gelenk gegeneinander verschwenkbare, vertikal ausgerichtete Platten aufweist, von denen eine mit der Werkzeugspindel und die andere mit dem Maschinenteil verbunden ist.

Die der Erfindung zugrunde liegende Aufgabe wird auf diese Weise vollkommen gelöst.

Der Erfinder der vorliegenden Anmeldung hat nämlich erkannt, dass durch die Abkehr von dem üblichen Maschinenkonzept und durch Wahl einer "Über-Kopf-Bearbeitung" ein freier Spänefall möglich wird, so dass die Späne nicht mehr auf dem Werkstück oder dem Werkstücktisch bzw. dessen Führungsschienen liegen bleiben können, sondern direkt in die Spänewanne abführbar sind.

Dieses Maschinenkonzept ermöglicht jetzt auch eine Trockenbearbeitung oder Bearbeitung mit Minimalmengenschmierung, das Kühlschmiermittel wird nämlich nicht mehr benötigt, um die entstehenden Späne abzuführen. Da die heißen Späne auch nicht mehr auf dem Werkstück oder im Bereich des Werkstücktisches liegen bleiben können, ergeben sich auch keine thermischen Deflektionen in diesem Bereich, so dass auch die Kühlwirkung des Kühlschmiermittels nicht mehr im bisherigen Maße benötigt wird.

Mit anderen Worten, durch die "Über-Kopf-Bearbeitung" ermöglicht das Werkzeugmaschinenkonzept eine Trockenbearbeitung oder Bearbeitung mit Minimalmengenschmierung, ohne dass die mit Trockenbearbeitung bzw. Minimalmengenschmierung im Stand der Technik auftretenden Probleme sich noch nachteilig auswirken können. Wegen der geringen Menge an eingesetztem Kühlschmiermittel sind die Späne nicht mehr mit Kühlschmiermittel benetzt, so daß sie beim Herunterfallen "aus dem Werkstück" auch nicht an vorzugsweise senkrecht ausgelegten Strukturen der neuen Werkzeugmaschine kleben bleiben können. Die trockenen Späne fallen vielmehr über geeignete Leitbleche geführt unmittelbar in die Spänewanne. Die Spänewanne wird allerdings durch die nun sehr heißen Spänne viel stärker aufgeheizt als bei der eingangs erwähnten Werkzeugmaschine. Die hier entstehenden Temperaturen können jedoch dadurch beherrscht werden, indem z.B. die Spänewanne thermisch gegenüber den heißen Spänen isoliert wird, wodurch thermische Deflektionen der Werkzeugmaschine selbst vermieden werden.

Dabei ist die Bearbeitungsgenauigkeit der neuen Werkzeugmaschine sehr groß, da die Spindel unmittelbar in Nähe der Verschiebemechanik unterhalb des Werkzeugstückes angeordnet ist, es sind also keine Ausleger oder ähnliches erforderlich. Dadurch wird in erster Näherung natürlich das Risiko erhöht, daß Späne an Teilen der Verschiebemechanik hängenbleiben. Durch die Ausbildung der Verschiebemechanik als Hebelgetriebe wird dieses Risiko jedoch wieder deutlich minimiert, denn die Verschiebemechanik umfaßt keine komplexen Führungsschienen und Schlitten, die in den drei orthogonalen Achsen zueinander verlaufen, die Bewegung der Werkzeugspindel wird zumindest in der Ebene des Werkstücktisches über ein reines Hebelgetriebe bewirkt, so daß für die fallenden Späne nur geringe Angriffsflächen vorhanden sind.

Dabei ist zum einen konstruktiv im Hinblick auf die Bearbeitungsgenauigkeit von Vorteil, daß die Platten des Hebelgetriebes für eine sehr steife Verschiebemechanik sorgen, so daß die Werkzeugspindel über die Hebelgetriebe weit auskragend unmittelbar am Maschinengestell unterhalb bzw. hinter dem Werkstücktisch gelagert werden kann. Dabei ist es bevorzugt, wenn zwei Hebelgetriebe vorgesehen sind, die wiederum höhenverschieblich an dem Maschinengestell befestigt sind. Auf diese Weise wird zum einen eine sehr große Steifigkeit und Verkippsicherheit erreicht, wobei zum anderen die vertikal verlaufende Führungsschiene nut wenig Angriffsflächen bietet, auf denen die entstehenden Späne liegenbleiben können.

Insgesamt ist es bevorzugt, wenn die Gelenke mit Abdeckkappen zum Schutz vor Spänen versehen sind und vorzugsweise die Platten an ihren oberen Schmalseiten Spanabweisflächen aufweisen.

Auch durch diese Maßnahmen wird auf konstruktiv einfache Weise dafür gesorgt, daß die entstehenden Späne nicht auf Flächen der Verschiebemechanik liegenbleiben, sondern effektiv ohne weitere Hilfsmittel in die Spänewanne abgeführt werden. Zwar besteht bei langen Spänen noch die Gefahr, daß diese auf den oberen Schmalseiten der Platten der Hebelgetriebe liegenbleiben, durch eine geeignete Werkzeuggeometrie kann das Entstehen von langen Spänen jedoch verhindert werden, wie es aus dem Stand der Technik allgemein bekannt ist.

Allgemein ist es bevorzugt, wenn der Werkstücktisch eine von unten zugängliche Vorrichtung zum Fixieren der Werkstücke aufweist und vorzugsweise zwei horizontal und parallel zueinander verlaufende Träger aufweist, an denen die Vorrichtung um eine horizontale Achse schwenkbar angeordnet ist.

Bei dieser Maßnahme ist von Vorteil, daß der Werkstücktisch im Bereich der Vorrichtung sozusagen nach unten offen ist, so daß der freie Spänefall nicht behindert wird. Sie ermöglicht aber auch eine komfortable Bedienung der neuen Werkzeugmaschine, denn zum Werkstückwechsel wird die Vorrichtung, die nach Art einer Wiegenplatte ausgebildet sein kann, lediglich um die horizontale Achse um 180° verschwenkt, so daß das fertig bearbeitete Werkstück jetzt oben auf dem Werkstücktisch liegt. Die Bedienungsperson kann dieses Werkstück jetzt ohne weiteres entnehmen und ein neues Werkstück einspannen.

Hierbei zeigt sich ein großer weiterer Vorteil der neuen Werkzeugmaschine, denn bei den zum Werkstückwechsel erforderlichen Arbeiten wird das Bedienungspersonal jetzt nicht mehr durch die Spindel behindert, da diese sich jetzt unterhalb des Werkstücktisches und nicht mehr - wie im Stand der Technik üblich - oberhalb des Werkstücktisches befindet. Damit besteht bei der neuen Werkzeugmaschine auch nicht mehr die Gefahr von Verletzungen durch z.B. heiße Späne, die noch nachträglich von der Werkzeugspindel herunterfallen.

Ein weiterer Vorteil der neuen Werkzeugmaschine ist darin zu sehen, daß diese eine deutlich geringere Höhe aufweist, denn der bisher für die Verschiebemechanik der Werkzeugspindel oberhalb des Werkstücktisches benötigte Raum ist nicht mehr erforderlich, die Verschiebemechanik wird vielmehr in dem bisher nicht genutzten Raum unterhalb des Werkstücktisches angeordnet. Die neue Werkzeugmaschine ist somit auch deutlich kompakter als bekannte Werkzeugmaschinen.

Dabei ist es dann bevorzugt, wenn zwischen den Trägern ein schräg nach unten und vorne verlaufendes Späneabweisblech angeordnet ist, wobei vorzugsweise unterhalb der Verschiebemechanik ein Spänesammeltrichter angeordnet ist, der anfallende Späne in eine Spänewanne leitet.

Durch das Späneabweisblech sowie den Spänesammeltrichter wird auf effiziente Weise dafür gesorgt, daß die bei der Bearbeitung von Werkstücken anfallenden Späne unmittelbar in die Spänewanne geleitet werden, ein Eindringen der Späne in ungeschützte Teile der Verschiebemechanik wird auf diese Weise verhindert. Das Späneabweisblech liegt nämlich durch seine schräg nach vorne und unten geneigte Lage zwischen dem oberen Ende der vertikalen Führungsschienen sowie Schlitten, auf denen die Hebelgetriebe vertikal verfahren werden, und dem Werkstück, also der Quelle der entstehenden Späne. Auf diese Weise wird die Verschiebemechanik effektiv vor anfallenden Spänen geschützt.

Allgemein ist es noch bevorzugt, wenn an dem Maschinengestell ein Werkzeugmagazin mit Speicherplätzen für Werkzeuge angeordnet ist und die einzelnen Speicherplätze zum Werkzeugwechsel durch die Werkzeugspindel unmittelbar anfahrbar sind.

An sich ist es bekannt, in einem Arbeitsraum einer Werkzeugmaschine ein Werkzeugmagazin vorzusehen, der Werkzeugwechsel erfolgt jedoch in der Regel durch eine zusätzliche Werkzeugwechselvorrichtung, die mit Greifern und Schwenkarmen ausgerüstet ist und Werkzeuge zwischen dem Werkzeugmagazin und der Werkzeugaufnahme der Spindel wechselt. Das Werkzeugmagazin ist dabei deutlich oberhalb des Werkstücktisches angeordnet, um ein Verschmutzen der vorrätig gehaltenen Werkzeuge durch herumfliegende Späne oder herumspritzendes Kühlschmiermittel zu verhindern. Die Werkzeugwechselvorrichtung ist in diesem Zusammenhang erforderlich, um die Werkzeuge sozusagen oben zu entnehmen und unten in die Spindel einzusetzen.

Durch die "Überkopf-Anordnung" ist es jetzt möglich, daß die Werkzeugspindel die einzelnen Speicherplätze des Werkzeugmagazins unmittelbar anfährt. Das Werkzeugmagazin kann dabei oberhalb der Ebene des Werkstücktisches angeordnet sein, so daß eine Verschmutzung der vorrätig gehaltenen Werkzeuge verhindert wird.

Das neue Maschinenkonzept ermöglicht es also darüber hinaus, auf die Werkzeugwechsler zu verzichten, ohne daß der im Stand der Technik dadurch gegebene Vorteil verlorengeht, daß nämlich die Werkzeuge in ihrer Speicherposition nicht verschmutzt werden.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kokmbinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung erläutert. Es zeigen:
- Fig. 1: eine Draufsicht auf die neue Werkzeugmaschine; und
- Fig. 2: eine Seitenansicht der neuen Werkzeugmaschine, ge- schnitten längs der Linie II-II aus Fig. 1.

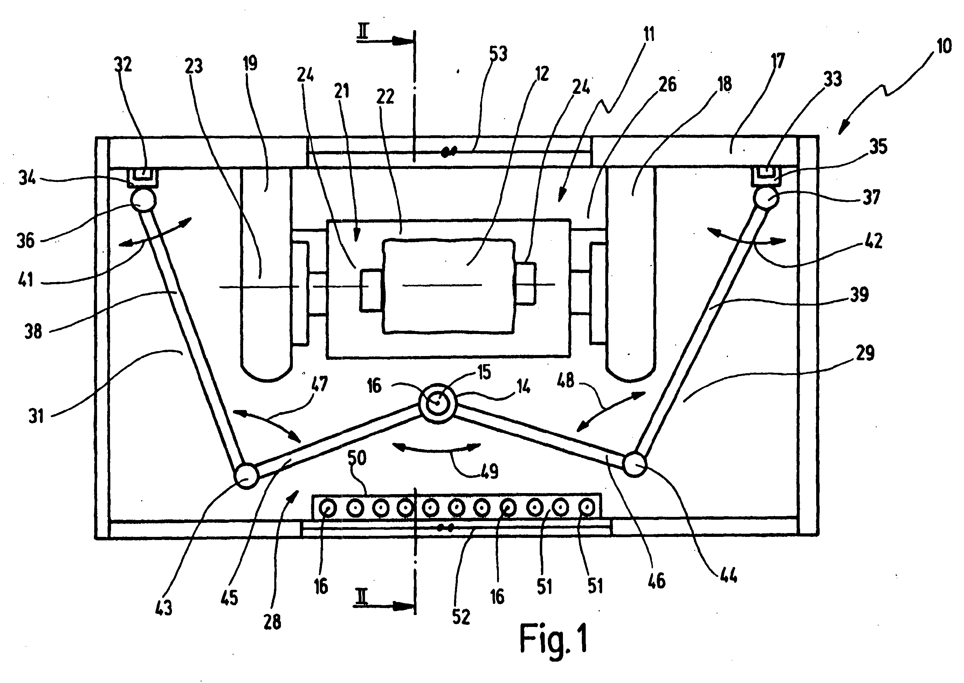

In Fig. 1 ist mit 10 allgemein eine Werkzeugmaschine bezeichnet, die in der Draufsicht dargestellt ist. Die Werkzeugmaschine 10 umfaßt einen Werkstücktisch 11, auf dem ein zu bearbeitendes Werkstück 12 in noch zu beschreibender Weise fixiert ist.

Weiter ist eine Werkzeugspindel 14 vorgesehen, in deren Werkzeugaufnahme 15 ein Werkzeug 16 zur Bearbeitung des Werkstückes 12 angeordnet ist.

In an sich bekannter Weise umfaßt die Werkzeugmaschine 10 ferner ein Maschinengestell 17, an dem sowohl der Werkstücktisch 11 als auch in noch zu beschreibender Weise die Werkzeugspindel 14 gelagert ist.

Der Werkstücktisch 11 umfaßt zwei parallel zueinander und horizontal verlaufende Träger 18, 19, die unmittelbar an dem Maschinengestell 17 befestigt sind.

Zwischen den Trägern 18, 19 ist eine Vorrichtung 21 zum Fixieren des zu bearbeitenden Werkstückes 12 vorgesehen. Die Vorrichtung 21 umfaßt eine Wiegenplatte 22, die um eine bei 23 angedeutete, horizontale Achse verschwenkbar ist. In der in Fig. 1 gezeigten Stellung zeigt das Werkstück 12 nach oben, also auf den Betrachter zu. Auf diese Weise sind Spannteile 24 erkennbar, die auf der Wiegenplatte 22 vorgesehen sind und das Werkstück 12 zwischen sich einspannen.

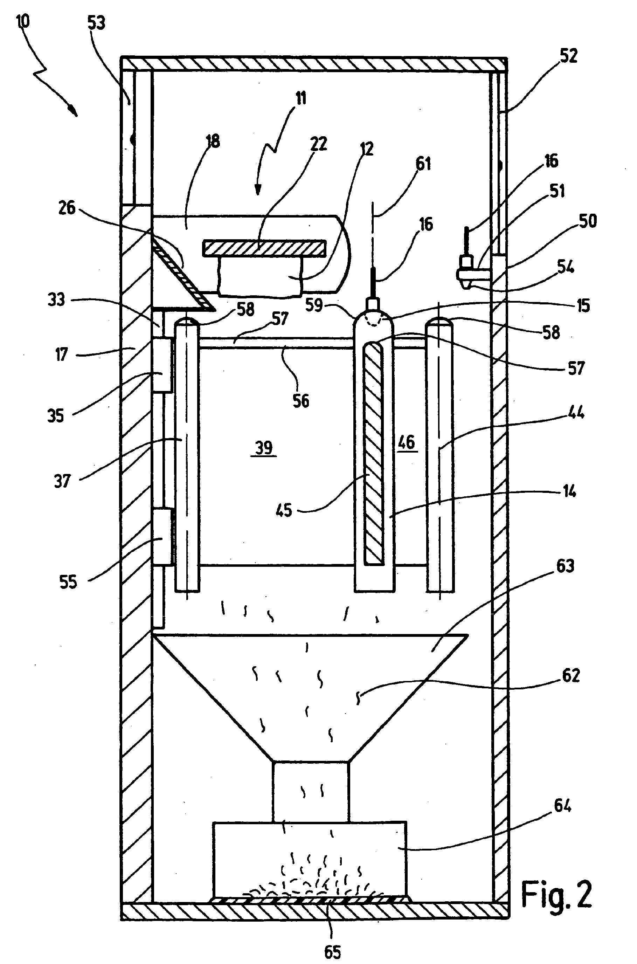

Zwischen den Trägern 18, 19 ist noch ein Späneabweisblech 26 angedeutet, das später im Zusammenhang mit der Fig. 2 noch näher erläutert werden wird.

Unterhalb des Werkstücktisches 11 ist eine Verschiebemechanik 28 für die Werkzeugspindel 14 vorgesehen, wobei diese geometrische Zuordnung besser aus der später noch beschriebenen Fig. 2 hervorgeht.

Die Verschiebemechanik 28 umfaßt zwei Hebelgetriebe 29, 31, die über Führungsschienen 32, 33 und Schlitten 34, 35 höhenverschieblich an dem Maschinengestell 17 gelagert sind.

Die Hebelgetriebe 29, 31 sind über Gelenke 36, 37 um eine horizontale Achse schwenkbar an dem Maschinengestell 18 gelagert. Die Hebelgetriebe 29, 31 umfassen dazu jeweils eine erste Platte 38, 39, die gemäß einem Pfeil 41 bzw. 42 verschwenkbar an dem Schlitten 34 bzw. 35 gelagert ist. Anderen Endes sind die Platten 38, 39 mit Gelenken 43, 44 verbunden, an denen ebenfalls zweite Platten 45, 46 der Hebelgetriebe 29, 31 angelenkt sind. Anderen Endes sind die zweiten Platten 45, 46 mit der Werkzeugspindel 14 verbunden.

Die ersten und zweiten Platten 38 und 45 bzw. 39 und 46 können zueinander verschwenkt werden, wie dies durch Pfeile 47 bzw. 48 angedeutet ist. Die zweiten Platten 45, 46 sind ferner gelenkig an der Werkzeugspindel 14 gelagert, wie dies durch einen Pfeil 49 dargestellt ist.

Durch die beiden Hebelgetriebe 29, 31 mit den Platten 38, 39, 45, 46 wird eine sehr steife Verschiebemechanik 28 für die Werkzeugspindel 14 gebildet, die zudem nicht verkippen und verkanten kann. Durch geeignetes Verschwenken der Platten 38, 39, 45, 46 um die Gelenke 36, 37, 43, 44 kann die Werkzeugspindel 14 unter einen beliebigen Punkt der Wiegenplatte 22 in horizontaler Richtung verfahren werden. Durch vertikales Verfahren längs der Führungsschienen 32, 33 kann das Werkzeug 16 dabei in das Werkstück 12 eindringen und z.B. Bohr- oder Fräsarbeiten durchführen.

An der in Fig. 1 vorderen Seite weist die Werkzeugmaschine 10 noch ein Werkzeugmagazin 50 mit Speicherplätzen 51 für auszuwechselnde Werkzeuge 16 auf. Durch geeignetes Verstellen der Gelenke 36, 37, 43, 44 kann die Werkzeugspindel 14 jeden Speicherplatz 51 in dem Werkzeugmagazin 50 anfahren und somit ein gebrauchtes Werkzeug 16 ablegen und ein neues Werkzeug 16 entnehmen.

Zur Bestückung des Werkzeugmagazines 50 ist eine Tür 52 vorgesehen, durch die Bedienungspersonal die Speicherplätze 51 leeren und neu bestücken können.

Auf der gegenüberliegenden Seite weist die Werkzeugmaschine 10 eine weitere Tür 53 auf, durch die ein bearbeitetes Werkstück 12 entnommen und ein zu bearbeitendes Werkstück 12 eingesetzt werden kann.

Während dieser Entnahmearbeiten befindet sich die Wiegenplatte 22 in der in Fig. 1 gezeigten Position. Zur Bearbeitung des Werkstückes 12 wird die Wiegenplatte 22 dann um die Achse 23 um 180° verschwenkt, so daß sie die in Fig. 2 gezeigte Position einnimmt, in der nämlich das Werkstück 12 nach unten auf die Werkzeugspindel 14 zuweist.

In Fig. 2 rechts oben ist zunächst zu erkennen, daß der Speicherplatz 51 des Werkzeugmagazins 50 mit einem nach oben weisenden Werkzeug 16 besetzt ist, das anderen Endes einen üblichen Steilkegel oder Hohlschaftkegel 54 aufweist.

Auf der gegenüberliegenden Wand des Maschinengestells 17 ist die Führungsschiene 33 mit dem oberen Schlitten 35 zu sehen, an dem das Gelenk 37 in geeigneter Weise befestigt ist. Weiter unten sitzt auf der Führungsschiene 33 ein zweiter Schlitten 55, durch den ein verkippen der gesamten Verschiebemechanik 28 verhindert wird.

Oberhalb der Führungsschiene 33 ist jetzt besser das Späneabweisblech 26 zu erkennen, das sich in Fig. 2 schräg nach unten rechts erstreckt und somit einen effektiven Schutz gegen Späne bietet, die bei der Bearbeitung des Werkstückes 12 entstehen und seitlich sowie nach unten wegspringen. Das Späneabweisblech 26 schützt also die Führungsschienen 32, 33 sowie die darauf laufenden Schlitten 34, 35, 55 vor Spänebefall und entsprechende Beschädigung oder Aufheizung.

Die Platten 38, 39, 45, 46 weisen an ihren oberen Schmalseiten 56 Spanabweisflächen 57 auf, die im einfachsten Falle im Querschnitt halbkreisförmig ausgebildet sind, wie dies an der geschnitten dargestellten Platte 45 oben deutlich zu sehen ist. Die Gelenke 36, 37, 43, 44 sind oben mit Abdeckkappen 58 versehen, so daß die senkrechten Flächen der Gelenke vor Spänen geschützt sind.

Auch die Werkzeugspindel 14 ist an ihrem oberen Ende 59 abgerundet ausgebildet, um ein Hängenbleiben von Spänen zu verhindern.

Im Betrieb, wenn also die Werkzeugspindel 14 das Werkzeug 16 um seine Spindelachse 61 dreht und das Werkzeug 12 "über Kopf" von unten bearbeitet, entstehen Späne 62, die über eine Spänesammeltrichter 63 in eine Spänewanne 64 geleitet werden.

Die Werkzeugmaschine 10 ist für Trockenbearbeitung oder Bearbeitung mit Minimalmengenschmierung vorgesehen, bei der so wenig Kühlschmiermittel eingesetzt wird, daß die entstehenden Späne 62 weder mit Kühlschmiermittel benetzt noch dadurch abgekühlt werden. Die entstehenden heißen Späne 62 werden durch das Späneabweisblech 26, die Späneabweisflächen 57 sowie die Abdeckkappen 58 in Fig. 2 nach unten geleitet, ein Liegenbleiben auf den Gelenken 36, 37, 43, 44 oder Platten 38, 39, 45, 46 oder gar den Führungsschienen 32, 33 wird auf diese Weise effektiv verhindert.

Mit anderen Worten, die entstehenden heißen Späne 62 werden unmittelbar über den Spänesammeltrichter 63 in die Spänewanne 64 geleitet. Da die Späne nicht mit Kühlschmiermittel benetzt sind, können sie auch an den im wesentlichen vertikalen Flächen der Platten 38, 39, 45, 46 sowie Gelenke 36, 37, 43, 44 und Werkzeugspindel 14 nicht anhaften und kleben bleiben.

Sämtliche heißen Späne 62 sammeln sich in der Spänewanne 64, die durch eine Isolation 65 gegenüber Aufheizen geschützt ist.

## Patentansprüche

1. Werkzeugmaschine mit einem Werkstücktisch (11) zum Fixieren von zu bearbeitenden Werkstücken (12) und einer Werkzeugspindel (14) mit einer Werkzeugaufnahme (15) für Werkzeuge (16) zur Bearbeitung der Werkstücke (12), bei der die Werkzeugspindel (14) mit nach oben weisender Werkzeugaufnahme (15) an einer zumindest zum Teil unterhalb des Werkstücktisches (12) angeordneten Verschiebemechnik (28) gelagert ist, so dass die Werkzeugmaschine (10) mit in Betriebsstellung nach oben weisendem Werkzeug (16) über Kopf arbeitet, wobei der Werkstücktisch (11) eine Vorrichtung (21) zum Fixieren der zu bearbeitenden Werkstücke (12) umfasst, wobei die Vorrichtung (21) um eine horizontale Achse (23) schwenkbar ist, **dadurch gekennzeichnet, dass** die Verschiebemechanik (28) zumindest ein Hebelgetriebe (29, 31) umfasst, das um eine durch ein Gelenk (35, 36) gebildete vertikale Achse schwenkbar an einem Maschinengestell (17) der Werkzeugmaschine (10) gelagert ist, und dass das Hebelgetriebe (29, 31) zwei um ein Gelenk (43, 44) gegeneinander verschwenkbare, vertikal ausgerichtete Platten (38, 45; 39, 46) aufweist, von denen eine (45, 46) mit der Werkzeugspindel (14) und die andere (38, 39) mit dem Maschinengestell (17) verbunden ist.

2. Werkzeugmaschine nach Anspruch 1, **dadurch gekennzeichnet, daß** die Gelenke (36, 37, 43, 44) mit Abdeckkappen (58) zum Schutz vor Spänen (62) versehen sind.

3. Werkzeugmaschine nach Anspruch 1 oder 2, **dadurch gekennzeichnet, daß** die Platten (38, 39, 45, 46) an ihren oberen Schmalseiten (56) Spanabweisflächen (57) aufweisen.

4. Werkzeugmaschine nach einem der Ansprüche 1 bis 3, **dadurch gekennzeichnet, daß** zwei Hebelgetriebe (29, 31) vorgesehen sind.

5. Werkzeugmaschine nach einem der Ansprüche 1 bis 4, **dadurch gekennzeichnet, daß** der Werkstücktisch (11) eine von unten zugängliche Vorrichtung (21) zum Fixieren der Werkstücke (12) aufweist.

6. Werkzeugmaschine nach Anspruch 5, **dadurch gekennzeichnet, daß** der Werkstücktisch (11) zwei horizontal und parallel zueinander verlaufende Träger (18, 19) aufweist, an denen die Vorrichtung (21) um eine horizontale Achse (23) schwenkbar angeordnet ist.

7. Werkzeugmaschine nach Anspruch 6, **dadurch gekennzeichnet, daß** zwischen den Trägern (18, 19) ein schräg nach unten und vorne verlaufendes Späneabweisblech (26) angeordnet ist.

8. Werkzeugmaschine nach einem der Ansprüche 1 bis 7, **dadurch gekennzeichnet, daß** unterhalb der Verschiebemechanik (28) eine Spänesammeltrichter (63) angeordnet ist, der anfallende Späne (62) in eine Spänewanne (64) leitet.

9. Werkzeugmaschine nach einem der Ansprüche 1 bis 8, **dadurch gekennzeichnet, daß** an einem Maschinengestell (17) ein Werkzeugmagazin (50) mit Speicherplätzen (51) für Werkzeuge (16) angeordnet ist und die einzelnen Speicherplätze (51) zum Werkzeugwechsel durch die Werkzeugspindel (14) unmittelbar anfahrbar sind.

## Claims

1. Machine tool having a work piece table (11) for fixing work pieces (12) to be machined, and a tool spindle (14) with a fixture (15) for tools (16) for machining said work pieces (12), wherein the tool spindle (14) is seated on a mechanical translation system (28) which is arranged, at least in part, below the work piece table (12), wherein the tool-holding fixture (15) is pointing upwards, such that the machine tool (10) works overhead with a tool (16) pointing upwards when in its operating condition, whereby the work piece table (11) comprises a device (21) for fixing work pieces (12) to be machined, and whereby said device (21) is pivotable about a horizontal axis (23),
**characterized in that** the mechanical translation system (28) comprises at least one lever mechanism (29, 31) mounted on a machine frame (17) of the machine tool (10) so that it can pivot about a vertical axis formed by a joint (35, 36), and that the lever mechanism (29, 31) comprises two vertically oriented plates (38, 45; 39, 46) that are mounted pivotably one relative to the other about a joint (43, 44), one of said plates (45, 46) being connected with the tool spindle (14) and the other plate (38, 39) being connected with the machine frame (17).

2. The machine tool of claim 1, **characterized in that** the joints (36, 37, 43, 44) are provided with caps (58) to protect them from chips (62).

3. The machine tool of claim 1 or claim 2, **characterized in that** the plates (38, 39, 45, 46) comprise chip-repellent surfaces (57) on their upper narrow sides (56).

4. The machine tool of anyone of claims 1 through 3, **characterized in that** two lever mechanisms (29, 31) are provided.

5. The machine tool of anyone of claims 1 through 4, **characterized in that** the work piece table (11) comprises a device (21) for fixing said work pieces (12), which device is accessible from below.

6. The machine tool of claim 5, **characterized in that** the work piece table (11) comprises two horizontal supports (18, 19) running parallel to each other, on which supports said device (21) is arranged for pivotal movement about a horizontal axis (23).

7. The machine tool of claim 6, **characterized in that** a chip baffle (26), extending obliquely in downward and forward direction, is arranged between said supports (18, 19).

8. The machine tool of anyone of claims 1 through 7, **characterized in that** below the mechanical translation system (28) a chip collector funnel (63) is arranged below the mechanical translation system (28) for transferring any chips (62) encountered into a chip pan (64).

9. The machine tool of anyone of claims 1 through 8, **characterized in that** a tool magazine (50) with storage positions (51) for tools (16) is arranged on the machine frame (17), and that the different storage positions (51) can be directly addressed by the tool spindle (14) for tool changes.

## Revendications

1. Machine-outil, comprenant un plateau porte-pièce (11) pour la fixation de pièces à travailler (12) à usiner et une broche porte-outil (14) avec un raccordement d'outil (15) pour des outils (16) en vue de l'usinage des pièces à travailler (12), dans laquelle la broche porte-outil (14), alors que le raccordement d'outil (15) est tourné vers le haut, est logée au niveau d'un mécanisme de décalage (28) disposé au moins en partie au-dessous du plateau porte-pièce (12), de sorte que la machine-outil (10) fonctionne en hauteur, l'outil (16) étant tourné vers le haut dans la position de service, dans laquelle le plateau porte-pièce (11) comprend un dispositif (21) pour la fixation des pièces à travailler (12) à usiner, dans laquelle le dispositif (21) est pivotant autour d'un axe horizontal (23), **caractérisée en ce que** le mécanisme de décalage (28) comprend au moins un mécanisme à leviers (29, 31) qui est logé de façon à pouvoir pivoter autour d'un axe vertical formé par une articulation (35, 36) sur un bâti de machine (17) de la machine-outil (10), et **en ce que** le mécanisme à leviers (29, 31) présente deux plaques (38, 45 ; 39, 46) orientées verticalement et pouvant pivoter l'une par rapport à l'autre autour d'une articulation (43, 44), l'une des plaques (45, 46) étant reliée à la broche porte-outil (14), et l'autre (38, 39) étant reliée au bâti de machine (17).

2. Machine-outil selon la revendication 1, **caractérisée en ce que** les articulations (36, 37, 43, 44) sont munies de capuchons (58) pour une protection contre les copeaux (62).

3. Machine-outil selon la revendication 1 ou 2, **caractérisée en ce que** les plaques (38, 39, 45, 46) présentent au niveau de leurs petits côtés supérieurs (56) des surfaces de déflexion de copeaux (57).

4. Machine-outil selon l'une quelconque des revendications 1 à 3, **caractérisée en ce que** deux mécanismes à leviers (29, 31) sont prévus.

5. Machine-outil selon l'une quelconque des revendications 1 à 4, **caractérisée en ce que** le plateau porte-pièce (11) présente un dispositif (21) accessible depuis le bas pour la fixation des pièces à travailler (12).

6. Machine-outil selon la revendication 5, **caractérisée en ce que** le plateau porte-pièce (11) présente deux supports (18, 19) s'étendant horizontalement et en parallèle l'un à l'autre au niveau desquels le dispositif (21) est disposé de façon à pouvoir pivoter autour d'un axe horizontal (23).

7. Machine-outil selon la revendication 6, **caractérisée en ce qu'**entre les supports (18, 19) est disposée une tôle de déflexion de copeaux (26) s'étendant de façon oblique vers le bas et vers l'avant.

8. Machine-outil selon l'une quelconque des revendications 1 à 7, **caractérisée en ce qu'**au-dessous du mécanisme de décalage (28), un entonnoir collecteur de copeaux (63) est disposé qui guide les copeaux (62) produits dans un bac à copeaux (64).

9. Machine-outil selon l'une quelconque des revendications 1 à 8, **caractérisée en ce que** sur un bâti de machine (17), un magasin d'outils (50) avec des emplacements de stockage (51) pour des outils (16) est disposé et les emplacements de stockage individuels (51) peuvent être approchés directement par la broche porte-outil (14) pour le changement d'outil.
